# EUROPÄISCHE PATENTANMELDUNG

(11) **EP 2 366 360 A1**
(43) Veröffentlichungstag der Anmeldung: **21.09.2011**
(21) Anmeldenummer: 10156833.5
(22) Anmeldetag: 18.03.2010
(51) Int. Cl.: A61C 8/00, A61C 13/00

(54) **Verbindungsstück zur Verbindung eines Zahnimplantats mit einer Zahnprothese und dessen Herstellung**

(71) Anmelder: Fischler, Titus, 4314 Zeiningen (CH)
(72) Erfinder: Fischler, Titus, 4314 Zeiningen (CH)
(74) Vertreter: Vossius & Partner

(57) **Zusammenfassung**

Ein Verfahren zur Herstellung eines Verbindungsstücks (1) zur Verbindung eines Zahnimplantats (2) mit einer Zahnprothese, wobei das Verbindungsstück (1) einen Körperabschnitt (11) aufweist, an dessen einem Ende Prothesenbefestigungsmittel (13) und an dessen entgegengesetztem Ende Implantatbefestigungsmittel (12) ausgestaltet sind, umfasst die folgenden Schritte: Erfassen von Implantatpositionsdaten, die Position und Ausrichtung des in einem Kiefer (3) eingesetzten Zahnimplantats (2) definieren; Bestimmen von Prothesenstellungsdaten, die Zielposition und Zielausrichtung der Prothesenbefestigungsmittel (13) des Verbindungsstücks (1) definieren; und Formen des Verbindungsstücks (1) unter Verwendung der Implantatposilionsdaten und der Prothesenstellungsdaten, wobei der Körperabschnitt (11) so ausgestaltet wird, dass die Prothesenbefestigungsmittel (13) in der Zielposition und Zielausrichtung angeordnet sind, wenn das Verbindungsstück (1) mittels der Implantatbefestigungsmittel (12) am Zahnimplantat (2) befestigt ist. Das erfindungsgemäße Verfahren ermöglicht es, die Zielposition und Zielausrichtung der Prothesenbefestigungsmittel (13) des Verbindungsstücks (1) so festzulegen, dass Ungenauigkeiten beim Einpflanzen des Zahnimplantats (2) ausgeglichen werden können. Mit dem Verfahren ist es möglich, ein individuelles Verbindungsstück (1) herzustellen, das einen angepasst auf die genaue Zielposition der Zahnprothese ausgestalteten Körperabschnitt (11) aufweist. Beispielsweise kann die Länge des Verbindungsstücks (11) angepasst auf die Position und Ausrichtung des in einem Kiefer eingesetzten Zahnimplantats (2) sowie auf die Zielposition und Zielausrichtung der Prothesenbefestigungsmittel (13) ausgestaltet werden. Ein solches individuelles Verbindungsstück (1) ermöglicht somit ein verhältnismäßig effizientes einfaches Aufsetzen der Zahnprothese ohne, dass die Prothesenverbindungsmittel (13) einer erhöhten Beanspruchung unterlegen.

## Beschreibung

### Technisches Gebiet

Die Erfindung betrifft ein Verfahren gemäß dem Oberbegriff des unabhängigen Patentanspruchs 1, eine Fräsvorrichtung zum Durchführen des Verfahrens, ein Computerprogramm zum Steuern der Fräsvorrichtung sowie ein Verbindungsstück gemäß dem Oberbegriff des Anspruchs 12.

Solche Verfahren können zur Herstellung eines Verbindungsstücks zur Verbindung eines Zahnimplantats mit einer Zahnprothese, wobei das Verbindungsstück einen Körperabschnitt aufweist, an dessen einem Ende Prothesenbefestigungsmittel und an dessen entgegengesetztem Ende Implantatbefestigungsmittel ausgestaltet sind, eingesetzt werden. Weiter können solche Verbindungsstücke zur Verbindung eines Zahnimplantats mit einer Zahnprothese, das einen Körperabschnitt aufweist, an dessen einem Ende Prothesenbefestigungsmittel und an dessen entgegengesetztem Ende Implantatbefestigungsmittel ausgestaltet sind, eingesetzt werden.

### Stand der Technik

In der Zahnmedizin werden heute regelmäßig beschädigte beziehungsweise kranke Zähne durch einen künstlichen Zahnersatz ersetzt. Dabei kann ein solcher Zahnersatz auf verschiedene Weise als Teil- oder Ganzzahnersatz sowie als festsitzender oder herausnehmbarer Zahnersatz ausgestaltet sein. Ein Zahnersatz umfasst häufig ein Zahnimplantat, ein Verbindungsstück beziehungsweise Abutment und eine Zahnprothese. Beim Ersetzen eines Zahns wird das Zahnimplantat als künstliche Zahnwurzel an einem Zielort in einen Kieferknochen eingepflanzt. Dazu wird der Kieferknochen teilweise vorgängig aufbereitet, indem beispielsweise Knochensubstanz aufgebaut wird (Osseosynthese) beziehungsweise durch künstliches Gewebe ersetzt wird und/oder indem ein Bohrloch am Zielort im Kieferknochen vorgesehen wird. Das Zahnimplantat wird dann im Allgemeinen beispielsweise über sein Schraubgewinde als enossales Zahnimplantat in den Kieferknochen eingedreht oder einfach eingesteckt. Innerhalb von typischerweise drei bis sechs Monaten verbindet sich das Zahnimplantat mit dem umgebenden Kieferknochen zu einer festen, belastungsfähigen Trägereinheit. Diesen Prozess bezeichnet man als Osseointegration. Zahnimplantate sind üblicherweise aus Titan oder auch aus keramischen Materialien hergestellt.

Auf das eingepflanzte Zahnimplantat wird das Verbindungsstück beziehungsweise Abutment des Zahnersatzes aufgesetzt, wobei dabei heute eine Vielzahl von Verbindungsmechanismen zur Verbindung des Zahnimplantats mit dem Abutment verwendet werden. Beispielsweise werden Abutments heute in Zahnimplantate eingeschraubt, wozu die Zahnimplantate jeweils ein Innengewinde als Implantatbefestigungsmittel aufweisen und die Abutments jeweils ein entsprechendes Außengewinde. Auf das Abutment wird dann die Zahnprothese aufgesetzt, wobei auch dazu heute eine Vielzahl verschiedener Verbindungsmechanismen verwendet werden. Beispielsweise beschreibt die US 6,299,447 B1 ein Druckknopfsystem als Verbindungsmechanismus, bei dem das Abutment ein Matrizenteil als Prothesenbefestigungsmittel aufweist und die Zahnprothese ein entsprechendes Patrizenteil.

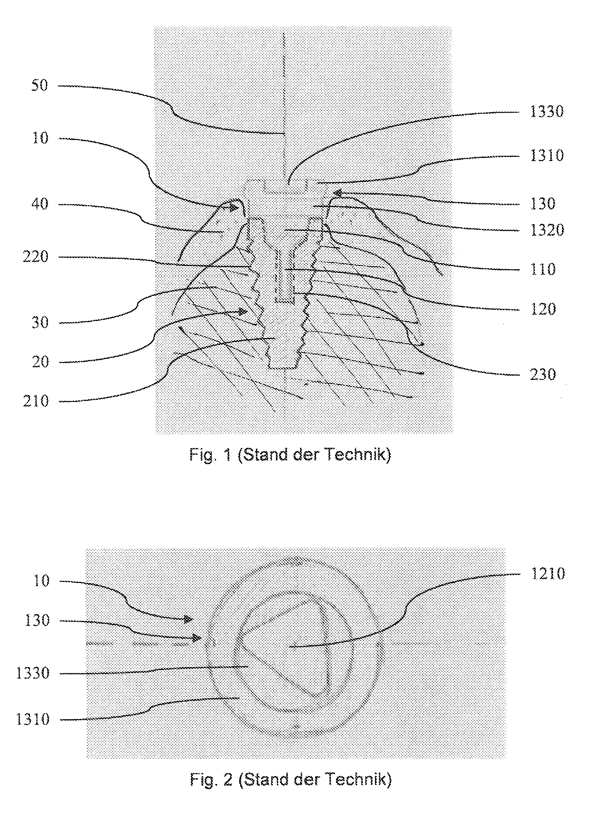

Der Aufbau eines beispielhaften Abutments 10 mit einem Patrizenteil 130 eines Druckknopfverbindungssystems sowie eines zugehörigen Zahnimplantats 20 ist in der Fig. 1 und der Fig. 2 gezeigt. Das Abutment 10 umfasst neben dem Patrizenteil 130 einen Körperabschnitt 110 und einen Schraubenzylinder 120 mit einem Außengewinde. Der Schraubenzylinder 120 ist in einen Hohlzylinder 230 mit einem dem Außengewinde des Schraubenzylinders 120 entsprechenden Innengewinde des Zahnimplantat 20 verschraubt, so dass das Abutment 10 und das Zahnimplantat 20 fest miteinander verbunden sind. Das Zahnimplantat 20 weist einen konischen Körper 210 mit einem Außengewinde 220 auf, der in einen Kieferknochen 30 eines Patienten eingepflanzt ist. Der Patrizenteil 130 umfasst einen an das Zahnimplantat 20 angrenzenden Zwischenabschnitt 1320, der vom Zahnfleisch beziehungsweise der Gingiva 40 umgeben ist, und einen diesen Zwischenabschnitt 1320 nach außen hin überragenden Einrastabschnitt 1310, Zentral weist der Patrizenteil 130 eine Öffnung 1330 auf, durch welche einen Drehwerkzeug in eine entsprechenden Fassung 1210 des Abutments 10 greifen kann und so das Abutment 10 mit dem Zahnimplantat 20 verschrauben kann. Das Abutment 10 und das Zahnimplantat 20 weisen eine gemeinsame zentrale Achse 50 auf.

Ein heute häufig vorkommendes Problem bei einem Zahnersatz wie oben beschrieben resultiert aus dem Umstand, dass die Position des Zahnimplantats die Position und Stellung des Verbindungsstücks und seiner Prothesenbefestigungsmittel maßgeblich beeinflusst und teilweise vorbestimmt. Da aber die exakte Position des Zahnimplantats von verschiedenen Faktoren abhängt, wie beispielsweise vom Zustand des Kieferknochens, vom Verlauf einer allfälligen Osseosynthese und insbesondere auch von einer exakten Insertion des Zahnimplantats, können heute regelmäßig Zahnprothesen nicht ohne Weiteres exakt an einer gewünschten Zielposition und in einer gewünschten Zielstellung gesetzt und mit einem zugehörigen Verbindungsstück verbunden werden.

Dieses Problem ist von zusätzlicher Relevanz bei Zahnprothesen, die beispielsweise für den Ersatz mehrerer Zähne vorgesehen sind und die über mehrere Zahnimplantate mit dem Kieferknochen verbunden werden. Für einen solchen Zahnersatz ist es essentiell, dass die Zahnimplantate und die darauf gesetzten Abutments jeweils möglichst genau in einer Zielposition angeordnet sind. Insbesondere sollen die Prothesenbefestigungsmittel der auf die Zahnimplantate aufgesetzten Abutments üblicherweise möglichst aus parallelisiert zueinander angeordnet sein, um eine einfaches stabiles und langfristiges Verbinden der Zahnprothese mit den Abutments zu ermöglichen. Wie oben beschrieben können aber Zahnimplantate nicht immer ausreichend exakt positioniert werden und insbesondere kann ein ausparalielisiertes Einpflanzen auf Grund der Gegebenheiten im Kieferknochen auch unmöglich sein. Da die Prothesenbefestigungsmittel häufig nicht ausreichend ausparallelisiert zueinander angeordnet sind, lassen heute einige Verbindungsmechanismen zum Verbinden von Zahnprothesen mit Abutments einen Ausgleich von divergierenden Zahnimplantaten in einem gewissen Rahmen zu. Beispielsweise können Patrizenteile und/oder Matrizenteile von Druckknopfsystemen der oben beschriebenen Art deformierbare Aufbeziehungsweise Einsätze aufweisen, die beispielsweise aus Polyamid und insbesondere aus Polyhexamethylenadipinsäureamid hergestellt sein können. Ein Druckknopfsystem mit solchen Auf- beziehungsweise Einsätzen ermöglicht zwar einen Ausgleich von Achsdivergenzen von disparallel eingepflanzten Zahnimplantaten in eine gewissen eingeschränkten Rahmen, jedoch werden die Auf- beziehungsweise Einsätze dabei so beansprucht, dass sie regelmäßig erneuert werden müssen, was aufwändig und teuer sein kann. Außerdem kann das Setzen des Zahnimplantats auf disparallel eingepflanzte Zahnimplantate zu unerwünschten Irritationen führen.

Der vorliegenden Erfindung liegt daher die Aufgabe zu Grunde, eine Verfahren oder System vorzuschlagen, mit dem auf verhältnismäßig einfache effiziente Weise Zahnprothesen eingesetzt werden können und mit dem Abweichungen einer für ein Zahnimplantat vorgesehenen exakten Position ausgeglichen werden können.

### Darstellung der Erfindung

Die Aufgabe wird erfindungsgemäß durch ein Verfahren gelöst, wie es im unabhängigen Anspruch 1 definiert ist sowie durch eine Fräsvorrichtung wie sie im unabhängigen Anspruch 11 definiert ist, ein Computerprogramm wie es im unabhängigen Anspruch 12 definiert ist und ein Verbindungsstück wie es im unabhängigen Anspruch 13 definiert ist. Vorteilhafte Ausführungsvarianten der erfindungsgemäßen Verfahren, Fräsvorrichtung, Computerprogramm und Verbindungsstück ergeben sich aus den abhängigen Patentansprüchen.

Das Wesen der Erfindung besteht im Folgenden: Ein Verfahren zur Herstellung eines Verbindungsstücks zur Verbindung eines Zahnimplantats mit einer Zahnprothese, wobei das Verbindungsstück einen Körperabschnitt aufweist, an dessen einem Ende Prothesenbefestigungsmittel und an dessen entgegengesetztem Ende implantatbefestigungsmittel ausgestaltet sind, umfasst die folgenden Schritte: Erfassen von Implantatpositionsdaten, die Position und Ausrichtung des in einem Kiefer eingesetzten Zahnimplantats definieren; Bestimmen von Prothesenstellungsdaten, die Zielposition und Zielausrichtung der Prothesenbefestigungsmittel des Verbindungsstücks definieren; und Formen des Verbindungsstücks unter Verwendung der Implantatpositionsdaten und der Prothesenstellungsdaten, wobei der Körperabschnitt so ausgestaltet wird, dass die Prothesenbefestigungsmittel in der Zielposition und Zielausrichtung angeordnet sind, wenn das Verbindungsstück mittels der Implantatbefestigungsmittel am Zahnimplantat befestigt ist. Verbindungsstücke der beschriebenen Art werden häufig auch als Abutments bezeichnet und diese beiden Bezeichnungen werden hier alternativ verwendet. Die Position und Ausrichtung des im Kiefer eingesetzten Zahnimplantats entspricht insbesondere der Position und Ausrichtung des in einem Kieferknochen eingepflanzten Zahnimplantats. Das Bestimmen der Prothesenstellungsdaten kann beispielsweise aus den Kieferdaten errechnend oder insbesondere auch computergestützt online erfolgen. Dabei können Daten über die Mundhöhle und insbesondere den betroffenen Kiefer mit den Implantatpositionsdaten kombiniert und dargestellt werden und die Zahnprothese kann virtuell in diese Darstellung eingesetzt werden, so dass die Prothesenstellungsdaten damit bestimmt sind. Das eine und das entgegengesetzte Ende des Körperabschnitts des Verbindungsstücks können den Längsenden des Körperabschnitts des Verbindungsstücks entsprechen.

Das erfindungsgemäße Verfahren ermöglicht es, die Zielposition und Zielausrichtung der Protheserbefestigungsmittel des Verbindungsstücks so festzulegen, dass trotz vorhandener Ungenauigkeiten bezüglich der Position und Ausrichtung des eingepflanzten beziehungsweise eingesetzten Zahnimplantats die Zahnprothese exakt in der Mundhöhle des Patienten positioniert und ausgerichtet werden kann. Zu diesem Zweck wird mit dem erfindungsgemäßen Verfahren insbesondere ein für den Patienten individuelles Verbindungsstück hergestellt, das einen angepasst auf die genaue Zielposition und -ausrichtung der Zahnprothese ausgestalteten Körperabschnitt aufweist. Beispielsweise wird dabei die Länge des Verbindungsstücks angepasst auf die Position und Ausrichtung des in einem Kiefer eingesetzten Zahnimplantats sowie auf die Zielposition und -ausrichtung der Prothesenbelestigungsmittel und somit auch der Zahnprothese ausgestaltet. Ein solches individuelles Verbindungsstück ermöglicht folglich ein verhältnismäßig effizientes, langfristiges, einfaches und stabiles Aufsetzen der Zahnprothese, ohne dass die Prothesenverbindungsmittel einer erhöhten Beanspruchung unterliegen. Weiter kann ein solches individuelles Verbindungsstück auch unabhängig vom Typ des eingepflanzten Implantats hergestellt werden.

Vorzugsweise definieren die Implantatpositionsdaten Position und Ausrichtung eines im Kiefer eingesetzten weiteren Zahnimplantats und die Prothesenstellungsdaten definieren die Zielposition und Zielausrichtung von Prothesenbefestigungsmitteln eines dem weiteren Zahnimplantat zugeordneten und dem Verbindungsstück entsprechenden weiteren Verbindungsstücks, wobei die Prothesenbefestigungsmittel des Verbindungsstücks und die Prothesenbefestigungsmittel des weiteren Verbindungsstücks ausparallelisiert zueinander angeordnet sind, wenn das Verbindungsstück am Zahnimplantat und das weitere Verbindungsstück am weiteren Zahnimplantat befestigt ist. Ausparalielisiert in diesem Zusammenhang bezieht sich auf die Ausrichtung der Prothesenbefestigungsmittel in Bezug auf die Zahnprothese, die mit den mehreren Verbindungsstücken verbindbar ist. Entsprechend dem beschriebenen weiteren Zahnimplantat können im Verfahren noch weitere zusätzliche Zahnimplantate einbezogen werden, je nachdem wie viele Zahnimplantate für die Fixierung der Zahnprothese am Kiefer zweckmäßig sind. Das beschriebene Ausparalielisieren kann von entscheidender Bedeutung für einen hohen Komfort für den Patienten in Bezug auf die Handhabung und auf die Hygienefreundlichkeit des Zahnersatzes sein, Insbesondere können unerwünschte Irritationen reduziert oder vermieden werden. Weiter kann beschriebene Ausparallelisieren einen frühzeitigen Verschleiß beziehungsweise eine übermäßigen Beanspruchung der Prothesenbefestigungsmittel des Verbindungsstücks und/oder der entsprechenden Befestigungsmittel der Zahnprothese verhindern. Bei einem Einsatz von einem Druckknopfverbindungssystem als Prothesenbefestigungsmittel kann zudem die Anzahl verschiedener Einbeziehungsweise Aufsätze, die ein ausgeglichenes Verbinden ermöglichen, reduziert werden, insbesondere von etwa sechs verschiedenen Ein- beziehungsweise Aufsätzen auf etwa drei verschiedene Ein- beziehungsweise Aufsätze.

Mit Vorteil wird beim Formen des Verbindungsstücks der Körperabschnitt des Verbindungsstücks gekrümmt ausgestaltet, Dabei umfasst eine solche gekrümmte Ausgestaltung alle Ausführungsformen, die nicht entlang einer geraden Achse verlaufen. Beispielsweise sind damit kurvig gebogene und insbesondere auch geknickte Ausgestaltungen umfasst. Mit einer solchen gekrümmten Ausgestaltung können Achsdivergenzen mehrerer Zahnimplantate auf einfache Weise kompensiert und ausgeglichen werden.

Vorzugsweise werden die Implantatpositionsdaten mittels einer Scantechnologie erfasst. Solche Scantechnologien, bei denen insbesondere geeignete Scanner wie Laserscanner verwendet werden, ermöglichen ein präzises und schnelles Erfassen der Implantatpositionsdaten.

Mit Vorteil umfassen die Implantatpositionsdaten Daten bezüglich der Ausgestaltung von Verbindungsstückbefestigungsmitteln des Zahnimplantats, wobei beim Formen des Verbindungsstücks die Implantstbefestigungsmittel des Verbindungsstücks korrespondierend zu den Verbindungsstückbefestigungsmitteln des Zahnimplantats ausgestaltet werden. Mit einem solchen Verfahren lässt sich das Verbindungsstück unabhängig von den Verbindungsstückbefestigungsmittel des Zahnimplantats geeignet ausgestalten. Insbesondere wird dadurch auch ermöglicht, dass Standardimplantate verwendet werden können und dass das individuelle Verbindungsstück flexibel mit geeigneten Implantatbefestigungsmittel ausgestattet wird.

Vorzugsweise werden beim Formen des Verbindungsstücks die Prothesenbefestigungsmittel als ein Teil einer Druckknopfverbindung ausgestaltet, insbesondere als Patrize. Patrize entspricht in diesem Zusammenhang dem männlichen Teil der Druckknopfverbindung. Die Prothesenbefestigungsmittel können auch als Matrize ausgestaltet sein. Die Zahnprothese weist dann entsprechend die Matrize beziehungsweise Patrize auf. Mit einer solchen Druckknopfverbindung kann ein verhältnismäßig sicheres und leichtes Verbinden des Zahnimplantats mit dem einen oder den mehreren Verbindungsstücken ermöglicht werden. Die Matrize beziehungsweise die Patrize des Verbindungsstücks kann verschiedene Materialien aufweisen und für eines aus verschiedenen möglichen bekannten Druckknopfverbindungssystemen ausgestaltet sein. Die Matrize beziehungsweise Patrize kann insbesondere angepasst an ein Standarddruckknopfverbindungssystem ausgestaltet sein, wobei bestimmte Elemente davon wie beispielsweise Einbeziehungsweise Aufsätze angepasst sein können.

Mit Vorteil umfassen Verbindungsstückbefestigungsmittel des Zahnimplantats ein Innengewinde, wobei beim Formen des Verbindungsstücks die Implantatbefestigungsmittel des Verbindungsstücks mit einem den Körperabschnitt durchragenden Schraubenloch ausgestaltet werden. Durchragendes Schraubenloch umfasst in diesem Zusammenhang sowohl Anordnungen, bei denen der Körperabschnitt des Verbindungsstücks in Längsrichtung vollständig von den Implantatbefestigungsmittel bis zu den Prothesenbefestigungsmittel durchbohrt ist, als auch Anordnungen bei denen das Schraubenloch bei den Implantatbefestigungsmitteln beginnt und dann den äußeren Rand des Körperabschnitts vor den Prothesenbefestigungsmitteln durchstößt. Diese zweite Anordnung kann insbesondere bei ausgeprägten Neigungswinkeln der Prothesenbefestigungsmittel zur Längsachse des Verbindungsstücks hin vorkommen, wodurch aber die Funktionalität der Prothesenbefestigungsmittel nicht entscheidend beeinträchtigt wird. Mit einem solchen Schraubenloch kann das Verbindungsstück verhältnismäßig einfach über eine Schraube oder ein schraubenähnliches Element sicher mit dem Zahnimplantat verbunden werden. Dabei werden beim Formen des Verbindungsstücks die Implantatbefestigungsmittel des Verbindungsstücks bevorzugt mit einem an das Schraubenloch angrenzenden Schraubenkopfanschlag ausgestaltet. Über einen solchen Schraubenkopfanschlag kann das Verbindungsstück mittels des Schraubenkopfs der mit dem Zahnimplantat verbundenen Schraube auf einfache Weise sicher an das Zahnimplantat gedrückt werden,

Vorzugsweise wird das Formen des Verbindungsstücks mittels eines Fräsprozesses durchgeführt. Solche Fräsprozesse ermöglichen eine rasche präzise und kosteneffiziente Herstellung des individuellen Verbindungsstücks. Insbesondere kann der Fräsprozess ein CAD/CAM-Fräsprozess sein, CAD bezieht sich in diesem Zusammenhang auf Computer Aided Design also auf rechnergestützte Formgebung und CAM bezieht sich in diesem Zusammenhang auf Computer Aided Manufacturing also auf rechnergestützte Fertigung. Dabei wird mit Vorteil im Fräsprozess das Verbindungsstück aus einem Grundblock gefräst, wobei der Grundblock Titan, eine Keramik wie Zirkondioxid, einen Kunststoff wie Acrylat oder Polyamid, eine Kobalt-Chrom-Kombination oder ein Gemisch davon umfasst.

Ein anderer Aspekt der vorliegenden Erfindung betrifft eine Fräsvorrichtung zum Durchführen des oben beschriebenen Verfahrens. Die Fräsvorrichtung wie beispielsweise eine CAD/CAM-Fräsvorrichtung umfasst dabei eine Schnittstelleneinrichtung, eine Eingabeeinrichtung und eine Fräseinrichtung, wobei die Schnittstelleneinrichtung dazu ausgestaltet ist, die Implantatpositionsdaten zu erfassen, wobei die Eingabeeinrichtung dazu ausgestaltet ist, die Prothesenstellungsdaten zu bestimmen, und wobei die Fräseinrichtung dazu ausgestaltet ist, das Verbindungsstück zu formen. Die Schniftstelleneinrichtung kann insbesondere dazu ausgestaltet sein, Implantatpositionsdaten eines Scanners zu übernehmen. Die Eingabeeinrichtung kann ebenfalls eine Schnittstelle beispielsweise zu einem Personalcomputer sein, eine Eingabemaske oder eine geführte visuelle Eingabe. Mit einer solchen Fräsvorrichtung kann das oben beschriebene Verfahren einfach und effizient durchgeführt werden.

Ein weiterer anderer Aspekt der vorliegenden Erfindung betrifft ein Computerprogramm zum Steuern einer oben beschriebenen Fräsvorrichtung insbesondere einer CAD/CAM-Fräsvorrichtung. Das Computerprogramm umfasst dabei Steuermittel, die dazu ausgestaltet sind, die Fräseinrichtung der Fräsvorrichtung so zu steuern, dass das Verbindungsstück unter Einbezug der über die Schnittsteileneinrichtung erfassten Implantatpositionsdaten und der über die Eingabeeinrichtung bestimmten Prothesenstellungsdaten geformt wird. Mit einem solchen Computerprogramm kann eine programmierbare geeignete Fräsvorrichtung effizient zum Durchführen des erfindungsgemäßen Verfahrens ausgestaltet werden.

Ein weiterer anderer Aspekt der Erfindung betrifft ein Verbindungsstück zur Verbindung eines Zahnimplantats mit einer Zahnprothese, das einen Körperabschnitt aufweist, an dessen einem Ende Prothesenbefestigungsmittel und an dessen entgegengesetztem Ende Implantatbefestigungsmittel ausgestaltet sind. Der Körperabschnitt ist dabei angepasst auf die Position und Ausrichtung des in einem Kiefer eingesetzten Zahnimplantats und auf eine Zielposition und Zielausrichtung der Prothesenbefestigungsmitlel zu einem bestimmungsgemäßen Anordnen der Zahnprothese individuell ausgestaltet. Individuell bezieht sich in diesem Zusammenhang insbesondere auf die Länge des Körperabschnitts und auf eine gekrümmte Ausgestaltung dessen. Das Verbindungsstück ermöglicht es, Ungenauigkeiten beim Einpflanzen des Zahnimplantats auszugleichen, Insbesondere kann es einen angepasst auf die genaue Zielposition der Zahnprothese ausgestalteten Körperabschnitt aufweisen. Beispielsweise kann die Länge und Krümmung des Verbindungsstücks angepasst auf die Position und Ausrichtung des in einem Kiefer eingesetzten Zahnimplantats sowie auf die die Zielposition und Zielausriclitung der Prothesenbefestigungsmittel ausgestaltet sein. Ein solches individuelles Verbindungsstück ermöglicht somit ein verhältnismäßig effizientes, langfristige, einfaches und stabiles Aufsetzen der Zahnprothese, ohne dass die Prothesenverbindungsmittel einer erhöhten Beanspruchung unterliegen. Vorzugsweise umfassen die Implantatbefestigungsmittel ein den Körperabschnitt in einer Längsrichtung durchragendes Schraubenloch und einen Schraubenkopfanschlag. Durchragendes Schraubenloch umfasst in diesem Zusammenhang wiederum sowohl Anordnungen, bei denen der Körperabschnitt des Verbindungsstücks in Längsrichtung vollständig von den Implantatbefestigungsmittel bis zu den Prothesenbefestigungsmittel durchbohrt ist, als auch Anordnungen bei denen das Schraubenloch bei den Implantatbefestigungsmitteln beginnt und dann den äußeren Rand des Körperabschnitts vor den Prothesenbefestigungsmitteln durchstößt. Mit einem solchen Schraubenloch kann das Verbindungsstück verhältnismäßig einfach über eine Schraube oder ein schraubenähnliches Element sicher mit dem Zahnimplantat verbunden werden. Dabei umfasst das Verbindungsstück bevorzugt eine auf das Schraubenloch und den Schraubenkopfanschlag angepasste Schraube, die aus Titan, einer Chrom-Kobald-Legierung oder einer Gold-Legierung hergestellt ist und eine Oberflächenbeschichtung zum Verhindern eines Lösens der Schraube aufweist Obwohl die Schraube bevorzugt aus einem solchen Material hergestellt ist und mit einer solchen Oberflächenbeschichtung versehen ist, kann sie auch aus einem anderen geeigneten Material hergestellt sein und/oder keine solche Oberflächenbeschichtung aufweisen. Mit einer solchen Schraube kann das Verbindungsstück bevorzugt sicher mit dem Zahnimplantat verbunden werden. Mit Vorteil sind die Prothesenbefestigungsmittel als ein Teil einer Druckknopfverbindung ausgestaltet, insbesondere als Patrize.

### Kurze Beschreibung der Zeichnungen

Im Folgenden wird die Erfindung unter Bezugnahme auf die beigefügten Zeichnungen anhand von Ausführungsbeispielen detaillierter beschrieben. Es zeigen:
- Fig. 1: eine schematische Querschnittsansicht eines Verbindungsstücks des Standes der Technik und eines in einem Kiefer angeordneten Zahnimplantats;
- Fig. 2: eine schematische Sicht auf das Verbindungsstück von Fig. 1;
- Fig. 3: eine schematische Querschnittsansicht eines Ausführungsbeispiels eines erfindungsgemäßen Verbindungsstücks und eines in einem Kiefer angeordneten Zahnimplantats; und
- Fig. 4: eine schematische Sicht auf das Verbindungsstück von Fig. 3.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke nach innen" und nach außen" bezeichnen Richtungen hin zum oder weg vom geometrischen Mittelpunkt des Zahnersatzes sowie benannter Teile derselben. Die Terminologie umfasst die oben ausdrücklich erwähnten Wörter, Ableitungen von denselben und Wörter ähnlicher Bedeutung.

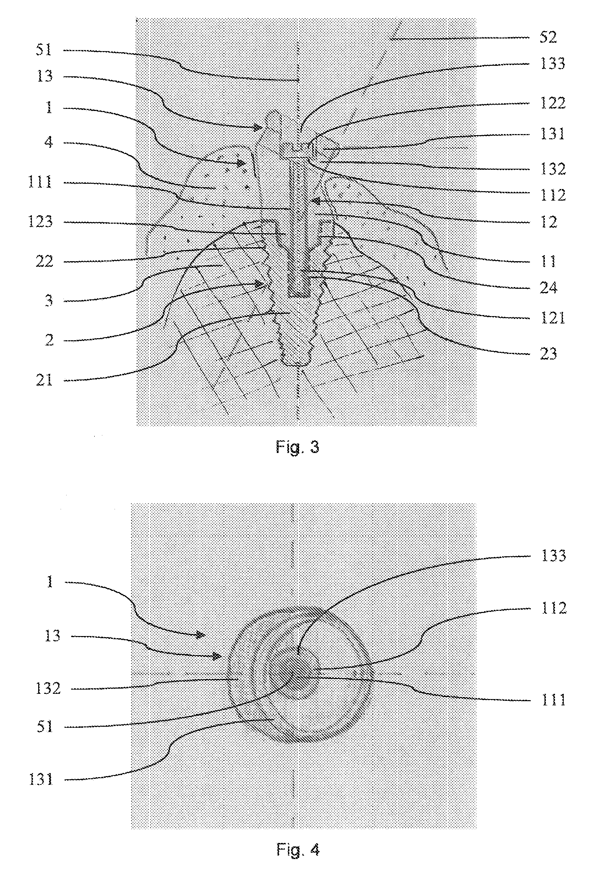

In Fig. 3 ist ein Querschnitt eines Ausführungsbeispiels eines erfindungsgemäßen individuellen Verbindungsstücks 1 gezeigt. Das Verbindungsstück 1 umfasst einen länglichen Körperabschnitt 11, der vom Zahnfleisch beziehungsweise der Gingiva 4 eines Patienten umgeben ist, und einen Patrizenteil 13 mit einem zylindrischen Zwischenabschnitt 132 und einem den Zwischenabschnitt 132 nach außen hin radial überragenden Einrastabschnitt 131. Der Körperabschnitt 11 wird von einem Schraubenloch 111 in Längsrichtung durchragt, das nach oben hin in eine hohlzylindrische Öffnung 133 des Patrizenteils 13 übergeht. Der Durchmesser der Öffnung 133 ist größer ausgestaltet als der Durchmesser des Schraubenloch 111, so dass am Übergang von Schraubenloch 111 zur Öffnung 133 eine Stufe 112 als Schraubenkopfanschlag ausgebildet ist.

Das Verbindungsstück 1 umfasst Implantatbefestigungsmittel 12, über die es fest mit einem Zahnimplantat 2 verbunden ist. Das Zahnimplantat 2 weist einen konischen Körper 21 auf, an dessen Außenseite ein Gewinde beziehungsweise eine Zahnung 22 angeordnet ist und der in einen Kieferknochen 3 des Patienten eingepflanzt beziehungsweise eingesetzt ist. Das Zahnimplantat 2 umfasst weiter Verbindungsstückbefestigungsmittel, die einen zentralen Hohlzylnder 23 mit einem Innengewinde und einen hohlkonischen Einpassabschnitt 24 aufweisen. Das Verbindungsstück 1 umfasst weiter Implantatbefestigungsmittel 12, die eine Schraube mit einem zylindrischen Schraubenkörper 121 und einem Schraubenkopf 122 sowie einen konischen Einpassabschnitt 123 des Körperabschnitts 11 aufweisen. Das Verbindungsstück 1 ist fest mit dem Zahnimplantat 2 verbunden, indem der Einpassabschnitt 123 des Körperabschnitts 11 in den Einpassabschnitt 24 des Zahnimplantats 2 eingeführt ist und indem durch das Schraubenloch 111 hindurch ragend die Schraube so angeordnet ist, dass der untere Bereich des Schraubenkörpers 121 in den Hohlzylinder 23 des Zahnimpiantats 2 eingeschraubt ist und dass der Schraubenkopf 122 oben auf der Stufe 112 anliegt, so dass das Verbindungsstück 1 an das Zahnimplantat 2 gedrückt ist.

Das Zahnimplantat 2 weist eine zentrale in Längsrichtung ausgestaltete Implantatachse 51 auf, entlang der auch die Implantatbefestigungsmittel 12 des Verbindungsstücks 1 angeordnet sind. Das Verbindungsstück 1 weist ferner eine Prothesenachse 52 auf, entlang der das Patrizenteil 13 des Verbindungsstücks 1 angeordnet ist sowie entsprechend auch ein Matrizenteil einer zugehörigen Zahnprothese anzuordnen ist. Die Implantatachse 51 steht angewinkelt zur Prothesenachse 52 und der Körperabschnitt 11 des Verbindungsstücks 1 ist, um dies zu ermöglichen, entsprechend gekrümmt beziehungsweise geknickt ausgestaltet.

Fig. 4 zeigt eine Aufsicht auf das Verbindungsstück 1 in Richtung der Implantatachse 51, wobei keine Schraube im Schraubenloch 111 angeordnet ist. Durch die gekrümmte Ausgestaltung des Körperabschnitts 11 ist auf der linken Seite der Zwischenabschnitt 132 des Patrizenteils 13 sichtbar. Außerdem ist in Fig. 4 der Einrastabschnitt 131 und die die Öffnung 133 des Patrizenteils 13 sowie die Stufe 112 gezeigt. Wie am besten in der Zusammenschau von Fig. 3 und Fig. 4 ersichtlich, kann die Schraube durch die Öffnung 133 des Patrizenteils 13 hindurch mittels eines geeigneten Schraubendrehers betätigt werden. Zum Aufsetzen der Zahnprothese wird ein Matrizenteil der Zahnprothese so auf das Patrizenteil 13 des Verbindungsstücks 1 gedrückt, dass der Einrastabschnitt 131 des Patrizenteils 13 in eine entsprechende Aufnahme des Matrizenteils einschnappt.

Zur erfindungsgemäßen Herstellung des Verbindungsstücks 1 werden mit einem Scanner Implantatpositionsdaten erfasst, die Position und Ausrichtung des im Kieferknochen 3 eingesetzten Zahnimplantats 2 definieren. Dazu kann insbesondere ein handelsüblicher Laserscanner verwendet werden. Weiter werden unter Berücksichtigung der Gegebenheiten in der Mundhöhle des Patienten und unter Berücksichtigung der einzusetzenden Zahnprothese, die insbesondere über mehrere Zahnimplantate 2 mit dem Kieferknochen 3 zu befestigen ist, Prothesenstellungsdaten bestimmt. Mit diesen Prothesenstellungsdaten sind die Zielposition und Zielausrichtung des Matrizenteils13 des Verbindungsstücks 1 definiert. Die Bestimmung Prothesenstellungsdaten kann insbesondere computergestützt online erfolgen. Dazu kann beispielsweise ein handelsüblicher Personalcomputer verwendet werden, auf dem ein dazu geeignetes Computerprogramm ausgeführt wird. Unter Verwendung der Implantatpositionsdaten und der Prothesenstellungsdaten wird dann mittels einer erfindungsgemäßen Fräsvorrichtung insbesondere einer CAD/CAM-Fräsvorrichtung das Verbindungsstück 1 aus einem Titanblock oder einem ähnliche geeigneten Block gefräst beziehungsweise geformt. Dabei wird der Körperabschnitt 11 des Verbindungsstück 1 so lang und so gekrümmt ausgestaltet, dass das Patrizenteil 13 in der Zielposition und Zielausrichtung angeordnet sind, wenn das Verbindungsstück 1 mittels der Iplantatbefestigungsmittel 12 am Zahnimplantat 2 befestigt ist.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind. Zum Beispiel kann die Erfindung auch durch folgende weitere konstruktive Variationen realisiert sein:
- Der Einpassabschnitt des Verbindungsstücks kann alternativ zur konischen Form auch in einer anderen geeigneten Form ausgestaltet sein, insbesondere als im Querschnitt pentagonaler, hexagonaler oder oktagonaler Zylinder. Der Einpassabschnitt des Zahnimplantats ist in diesem Fall entsprechend korrespondierend ausgestaltet.
- Anstelle der Schraube könne die Implantatbefestigungsmittel des Verbindungsstücks auch stiftförmig ausgestaltet und beispielsweise mit einem Einratsabschnitt versehen sein. Die Verbindungsstückbefestigungsmittel des Zahnimplantats sind in dem Fall korrespondierend dazu ausgebildet. Oder die Implantatbefestigungsmittel können auch zusammen mit den Verbindungsstückbefestigungsmittel eine Bajonettverschluss bilden. Insbesondere können die Implantatbefestigungsmittel korrespondierend zu bekannten Verbindungsstückbefestigungsmitteln ausgebildet sein.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Ausführungsformen und einzelne deren Merkmale vom Erfindungsgegenstand ausgeschlossen sein.

Im Weiteren schließt der Ausdruck "umfassen" und Ableitungen davon andere Elemente oder Schritte nicht aus. Ebenfalls schließt der unbestimmte Artikel "ein" bzw, "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Insbesondere kann ein Computerprogramm beispielsweise ein auf einem computerlesbaren Medium gespeichertes Computerprogrammprodukt sein, das dazu ausgestaltet ist, ausgeführt zu werden, um ein Verfahren zu implementieren, insbesondere das erfindungsgemäße Verfahren. Alle Bezugszeichen in den Ansprüchen sind nicht als den Umfang der Ansprüche einschränkend zu verstehen.

## Patentansprüche

1. Verfahren zur Herstellung eines Verbindungsstücks (1) zur Verbindung eines Zahnimplantat (2) mit einer Zahnprothese, wobei das Verbindungsstück (1) einen Körperabschnitt (11) aufweist, an dessen einem Ende Prothesenbefestigungsmittel (13) und an dessen entgegengesetztem Ende Implantatbefestigungsmittel (12) ausgestaltet sind, **gekennzeichnet durch** die folgenden Schritte:
Erfassen von Implantatpositionsdaten, die Position und Ausrichtung des in einem Kiefer (3) eingesetzten Zahnimplantats (2) definieren;
Bestimmen von Prothesenstellungsdaten, die Zielposition und Zielausrichtung der Prothesenbefestigungsmittel (13) des Verbindungsstücks (1) definieren; und
Formen des Verbindungsstücks (1) unter Verwendung der Implantatpositionsdaten und der Prothesenstellungsdaten, wobei der Körperabschnitt (11) so ausgestaltet wird, dass die Prothesenbefestigungsmittel (13) in der Zielposition und Zielausrichtung angeordnet sind, wenn das Verbindungsstück (1) mittels der Implantatbefestigungsmittel (12) am Zahnimplantat (2) befestigt ist.

2. Verfahren nach Anspruch 1, bei dem die Implantatpositionsdaten Position und Ausrichtung eines im Kiefer (3) eingesetzten weiteren Zahnimplantats (2) definieren und bei dem die Prothesenstellungsdaten die Zielposition und Zielausrichtung von Prothesenbefestigungsmitten (13) eines dem weiteren Zahnimplantat (2) zugeordneten und dem Verbindungsstück (1) entsprechenden weiteren Verbindungsstücks (1) definieren, wobei die Prothesenbefestigungsmittel (13) des Verbindungsstücks (1) und die Prothesenbefestigungsmittel (13) des weiteren Verbindungsstücks (1) ausparallelisiert zueinander angeordnet sind, wenn das Verbindungsstück (1) am Zahnimplantat (2) und das weitere Verbindungsstück (1) am weiteren Zahnimplantat (2) befestigt ist.

3. Verfahren nach Anspruch 1 oder 2, wobei beim Formen des Verbindungsstücks (1) der Körperabschnitt (11) des Verbindungsstücks (1) gekrümmt ausgestaltet wird.

4. Verfahren nach einem der vorangehenden Ansprüche, bei dem die Implantatpositionsdaten mittels einer Scantechnologie erfasst werden.

5. Verfahren nach einem der vorangehenden Ansprüche, bei dem die Implantatpositionsdaten Daten bezüglich der Ausgestaltung von Verbindungsstückbefestigungsmitteln (23, 24) des Zahnimplantats (2) umfassen, wobei beim Formen des Verbindungsstücks (1) die Implantatbefestigungsmittel (12) des Verbindungsstücks (1) korrespondierend zu den Verbindungsstückbefestigungsmitteln (23, 24) des Zahnimplantats (2) ausgestaltet werden.

6. Verfahren nach einem der vorangehenden Ansprüche, wobei beim Formen des Verbindungsstücks (1) die Prothesenbefestigungsmittel (13) als ein Teil einer Druckknopfverbindung ausgestaltet werden, insbesondere als Patrize.

7. Verfahren nach einem der vorangehenden Ansprüche, wobei Verbindungsstückbefestigungsmittel (23, 24) des Zahnimplantats (2) ein Innengewinde umfassen und wobei beim Formen des Verbindungsstücks (1) die Implantatbefestigungsmittel (12) des Verbindungsstücks (1) mit einem den Körperabschnitt (11) durchragenden Schraubenloch (111) ausgestaltet werden.

8. Verfahren nach Anspruch 7, wobei beim Formen des Verbindungsstücks (1) die Implantatbefestigungsmittel (12) des Verbindungsstücks (1) mit einem an das Schraubenloch (111) angrenzenden Schraubenkopfanschlag (112) ausgestaltet werden.

9. Verfahren nach einem der vorangehenden Ansprüche, bei dem das Formen des Verbindungsstücks (1) mittels eines Fräsprozesses durchgeführt wird.

10. Verfahren nach Anspruch 9, bei dem im Fräsprozess das Verbindungsstück (1) aus einem Grundblock gefräst wird, wobei der Grundblock Titan, eine Keramik wie Zirkondioxid, einen Kunststoff wie Acrylat oder Polyamid, eine Kobalt-Chrom-Kombination oder ein Gemisch davon umfasst.

11. Fräsvorrichtung zum Durchführen des Verfahrens nach einem der vorangehenden Ansprüche, die eine Schnittstelleneinrichtung, eine Eingabeeinrichtung und eine Fräseinrichtung umfasst, wobei die Schnittstelleneinrichtung dazu ausgestaltet ist, die Implantatpositionsdaten zu erfassen, wobei die Eingabeeinrichtung dazu ausgestaltet ist, die Prothesenstellurigsdaten zu bestimmen, und wobei die Fräseinrichtung dazu ausgestaltet ist, das Verbindungsstück (1) zu formen.

12. Computerprogramm zum Steuern einer Fräsvorrichtung nach Anspruch 11, das Steuermittel umfasst, die dazu ausgestaltet sind, die Fräseinrichtung der Fräsvorrichtung so zu steuern, dass das Verbindungsstück (1) unter Einbezug der über die Schnittstelleneinrichtung erfassten Implantatpositionsdaten und der über die Eingabeeinrichtung bestimmten Prothesenstellungsdaten geformt wird.

13. Verbindungsstück (1) zur Verbindung eines Zahnimplantats (2) mit einer Zahnprothese, das einen Körperabschnitt (11) aufweist, an dessen einem Ende Prothesenbefestigungsmittel (13) und an dessen entgegengesetztem Ende Implantatbefestigungsmittel (12) ausgestaltet sind, **dadurch gekennzeichnet, dass** der Körperabschnitt (11) angepasst auf die Position und Ausrichtung des in einem Kiefer (3) eingesetzten Zahnimplantats (2) und auf eine Zielposition und Zielausrichtung der Prothesenbefestigungsmittel (13) zu einem bestimmungsgemäßen Anordnen der Zahnprothese individuell ausgestaltet ist.

14. Verbindungsstück (1) nach Anspruch 13, bei dem die Implantatbefestigungsmittel (12) ein den Körperabschnitt (11) in einer Längsrichtung durchragendes Schraubenloch (111) und einen Schraubenkopfanschlag (112) umfassen.

15. Verbindungsstück (1) nach Anspruch 14, das eine auf das Schraubenloch (111) und den Schraubenkopfanschlag (112) angepasste Schraube (121, 122) umfasst, die aus Titan, einer Chrom-Kobald-Legierung oder einer Gold-Legierung hergestellt ist und eine Oberflächenbeschichtung zum Verhindern eines Lösens der Schraube (121, 122) aufweist.

16. Verbindungsstück (1) nach einem der Ansprüche 13 bis 15, bei dem die Prothesenbefestigungsmittel (13) als ein Teil einer Druckknopfverbhdung ausgestaltet sind, insbesondere als Patrize.
